# EUROPÄISCHE PATENTSCHRIFT

(11) **EP 0 752 455 B1**
(45) Veröffentlichungstag und Bekanntmachung des Hinweises auf die Patenterteilung: **08.12.1999**
(21) Anmeldenummer: 96114012.6
(22) Anmeldetag: 19.02.1992
(51) Int. Cl.: C09D 7/14, C09D 5/02

(54) **Verfahren zur Herstellung einer Autoreparaturlackierung**
Method for producing a car-refinishing lacquer
Procédé de prépartion d'une peinture de retouche pour véhicule automobile

(30) Priorität: 30.03.1991 DE 4110520
(43) Veröffentlichungstag der Anmeldung: 08.01.1997
(62) Teilanmeldung aus: 92904918.7
(73) Patentinhaber: BASF Coatings Aktiengesellschaft, 48165 Münster (DE)
(72) Erfinder: Mayer, Bernd, Dr., 48165 Münster (DE); Piontek, Susanne, Dr., 48165 Münster (DE); Wegner, Egon, Dr, 48143 Münster (DE)
(74) Vertreter: Fitzner, Uwe, Dr.

(56) Entgegenhaltungen:
- EP-A- 0 052 224
- EP-A- 0 121 308
- EP-A- 0 195 931
- EP-A- 0 311 209
- EP-A- 0 368 499
- EP-A- 0 471 972

## Beschreibung

Die vorliegende Erfindung betrifft ein Verfahren zur Herstellung einer Autoreparaturlackierung aus einem Überzugsmittel mit genau festgelegter Tönung, bei dem verschiedene Basisfarben getrennt gelagert und erst kurz vor der Applikation zu dem Überzugsmittel in dem gewünschten Farbton gemischt werden.

Übliche Verfahren zur Ausbesserung von Schadstellen an einer gegebenenfalls mehrschichtigen Lackierung beinhalten die sorgfältige Reinigung und Schleifen, ggf. Spachteln und Füllern an der Schadstelle. Danach wird die Schadstelle ggf. nach einer weiteren Vorbehandlung üblicherweise deckend und auslaufend in die angrenzenden Bereiche hinein mit Effektlacken, wie z.B. Metallicbasislacken, oder mit Unilacken gespritzt. Nach Antrocknung des so hergestellten Überzuges werden der Überzug und die angrenzenden Teile mit einem Klarlack überspritzt und nach einer ggf. notwendigen Ablüftzeit wird der Klarlacküberzug gemeinsam mit den vorher aufgebrachten Schichten vorzugsweise bei Temperaturen zwischen 50 und 100 °C getrocknet.
Als Effekt-Lacke und/oder im Zweischichtverfahren aufgebrachte Unilacke für das Ausbessern von Schadstellen werden üblicherweise festkörperarme Lacke verwendet, die neben Bindemitteln farb- und/oder effektgebende Pigmente und einen hohen Anteil organischer Lösemittelgemische enthalten.
Diese Lacke werden entweder vom Lackhersteller im gewünschten Farbton geliefert, oder der Farbton wird vor der Applikation aus einem Mischsystem mehrerer Basisfarben hergestellt. Diese Herstellung aus einem Mischsystem hat den Vorteil, daß nicht jeder Farbton einzeln hergestellt und bevorratet werden muß und daß somit Produktions-, Distributions- und Lagerhaltungskosten gesenkt werden können. In beiden Fällen ist es notwendig, daß die gelieferten Lacke eine ausreichende Lagerstabilität (mindestens 12 Monate) aufweisen. Für ein Mischsystem hat außerdem die Farbtongenauigkeit der Basisfarben eine große Bedeutung.

Während im Bereich der Serienlackierung zunehmend wasserverdünnbare Basislacke eingesetzt werden, werden im Bereich der Autoreparaturlackierung noch konventionelle, d.h. lösemittelhaltige, Basislacke eingesetzt. Diese bisher für die Reparaturlackierung verwendeten festkörperarmen Basislacke haben eine von den bisher für die Serienlackierung verwendeten wasserverdünnbaren Basislacken deutlich verschiedene Zusammensetzung. So erfolgt beispielsweise die Rheologiesteuerung bei den konventionellen Systemen zum größten Teil über die Verdunstungsgeschwindigkeit der organischen Lösemittel (Festkörperanstieg zwischen Applikationsgerät und zu lackierendem Objekt), während bei den wäßrigen Systemen die Rheologiesteuerung durch externe Verdickungsmittel oder durch entsprechende Modifikationen im Bindemittel erfolgt. Für den Übergang von konventionellen zu wasserverdünnbaren Systemen ist daher ein bloßer Austausch der verwendeten Bindemittel gegen wasserverdünnbare Bindemittel nicht ausreichend. Auch der Einsatz der im Bereich der Serienlackierung verwendeten wasserverdünnbaren Systeme im Bereich der Reparaturlackierung ist aufgrund der unterschiedlichen Anforderungen an die Systeme in beiden Bereichen zur Zeit nicht möglich. Die für die Serienlackierung (Fahrzeugerstlackierung) verwendeten wasserverdünnbaren Metallic-Basislacke weisen nämlich keine für den Bereich der Reparaturlackierung ausreichende Lagerstabilität auf, da bei diesen wasserverdünnbaren Lacken Probleme bei der Gasungsstabilität (H₂-Bildung durch Reaktion von Wasser mit der Aluminiumbronze) und/oder Effektstabilität auftreten. Beides beeinträchtigt nachhaltig den Farbton bzw. die Aufsichthelligkeit der resultierenden Beschichtungen. Daher sind diese Systeme in der Reparaturlackierung nicht zum Einsatz gekommen.

Aber nicht nur Effektpigmente enthaltende wasserverdünnbare Lacke zeigen Probleme hinsichtlich der Lagerstabilität. Auch farbgebende Pigmente können durch längere Einwirkung von Wasser, z. B. in alkalischem Medium, angegriffen werden. Um keiner zu großen Einschränkung bei der Auswahl der handelsüblichen Pigmente zu unterliegen, besteht auch ein Bedarf für die Formulierung von lagerstabilen Basisfarben mit diesen farbgebenden Pigmenten.

Aus wirtschaftlichen Gründen, zur Verbesserung der Arbeitssicherheit (Brandschutz) und zur Verringerung der Umweltbelastung beim Trocknen der Lackfilme ist man auch im Bereich der Reparaturlackierung bemüht, organische Lösemittel in den Überzugsmitteln so weit wie möglich zu reduzieren. Die mangelnde Lagerstabilität der bekannten wasserverdünnbaren Basislacke verhinderte jedoch bisher den Aufbau eines oben beschriebenen Mischsystems aus derartigen wasserverdünnbaren Basislacken.

Aus der EP-A-320 552 ist nun ein Verfahren zur Herstellung eines mehrschichtigen Überzugs bekannt, bei dem auf das mit einem Füller versehene Substrat zunächst eine wäßrige, bevorzugt Metallicpigmente enthaltende Überzugszusammensetzung aufgebracht und getrocknet wird, ehe ein üblicher Wasserbasislack und anschließend ein Klarlack aufgebracht werden. Durch die Applikation der wäßrigen Überzugszusammensetzung vor der Basecoat/Clearcoat-Beschichtung soll eine Verbesserung des Metalliceffektes, insbesondere der Aufsichthelligkeit, erreicht werden.
Dieses in der EP-A-320 552 beschriebene Verfahren ist hauptsächlich für die Herstellung einer Erstlackierung geeignet, jedoch wird in der Beschreibung auch auf die Möglichkeit hingewiesen, dieses Verfahren im Bereich der Reparaturlackierung einzusetzen.

Die in dem Verfahren der EP-A 320 552 eingesetzten wäßrigen Überzugszusammensetzung werden durch Einarbeiten einer Aluminiumpigmentpaste in wäßrige Mischlacke hergestellt. Die verwendete Aluminiumpaste stellt dabei eine Anteigung von Aluminium-Bronze in organischen Lösemitteln und einem Emulgator dar. Diese Aluminiumpaste setzt aber schon innerhalb weniger Stunden ab und führt so zu Bodensatz. Dies wiederum führt aber regelmäßig zu Farbtonabweichungen. Diese abgesetzte Paste ist nur bedingt mit geeigneten Rühraggregaten aufrührbar. Außerdem stehen Lackierern in der Regel derartige Rühraggregate nicht zur Verfügung. Derartige Aluminiumpasten sind daher für den Aufbau von Mischsystemen für die Reparaturlackierung nicht geeignet.

Auch die nach Einarbeitung der Aluminiumpaste in die wäßrigen Mischlacke erhaltenen wäßrigen Überzugszusammensetzungen zeigen eine unzureichende Lagerstabilität, die nicht den Anforderungen der Lackierer genügt.

Weiterhin sind aus der EP-A-195 931 und der EP-A-297 576 wäßrige Überzugsmittel für die Herstellung eines Mehrschichtüberzuges im Bereich der Serienlackierung bekannt. Die Herstellung der wäßrigen Überzugsmittel erfolgt durch Einarbeitung einer Pigmentpaste in die wäßrige Bindemitteldispersion. Die Pigmentpaste wird dabei durch Anreiben der entsprechenden Pigmente mit möglichst geringen Mengen eines Anreibeharzes sowie ggf. mit organischen Lösemitteln und ggf. mit Wasser hergestellt. Der Aufbau eines Mischsystems für den Bereich der Reparaturlackierung und die hierfür erforderlichen Maßnahmen, wie zum Beispiel die getrennte Lagerung einzelner Komponenten, sind jedoch in der EP-A-195 931 und der EP-A-297 576 nicht beschrieben. Die pigmentierten wäßrigen Überzugsmittel selbst sind dabei aufgrund der unzureichenden Lagerstabilität nicht für den Bereich der Reparaturlackierung geeignet.

Auch aus der EP-B-38 127 sind wäßrige Überzugsmittel für die Herstellung eines Mehrschichtüberzuges im Bereich der Serienlackierung bekannt. Die Herstellung der wäßrigen Überzugsmittel erfolgt wiederum durch Einarbeiten einer Pigmentpaste in die wäßrige Bindemitteldispersion. Die Pigmentpaste wird dabei durch Anreiben der Pigmente mit einem Melaminharz sowie organischen Lösemitteln hergestellt. Der Aufbau eines Mischsystmes für den Bereich der Reparaturlackierung und die hierfür erforderlichen Maßnahmen sind aber wiederum nicht beschrieben. Auch diese pigmentierten wäßrigen Überzugsmittel der EP-B-38 127 sind aufgrund einer unzureichenden Lagerstabilität nicht für den Bereich der Reparaturlackierung geeignet.

In der EP-A-368 499 sind wasserverdünnbare, insbesondere Metallicpigmente enthaltende Beschichtungsmassen mit einer verbesserten Lagerstabilität beschrieben. Die Lagerstabilität wird dadurch erzielt, daß zunächst eine wasserfreie Bindemittellösung aus 25 bis 95 Gew.-% eines Polyether- bzw. Polyesterpolyols, 2,5 bis 50 Gew.-% eines Aminoplastharzes und 0 bis 50 Gew.-% eines organischen Lösemittels hergestellt wird, in die die Pigmente eingearbeitet werden. Diese Bindemittellösung wird kurz vor der Applikation mit Wasser auf die jeweils gewünschte Viskosität eingestellt.

In der EP-A-368 499 ist die Verwendung der wasserfreien Bindemittellösungen in einem Mischsystem nicht beschrieben. Außerdem ist die Verwendung der Beschichtungsmassen der EP-A-368 499 unter Reparaturbedingungen nicht möglich, da der hohe Polyether/Polyester-Anteil nicht zu ausreichend wasserfesten Filmen führt. Ferner ist der erreichte metallische Effekt bei weitem nicht ausreichend für die Fahrzeugerst- oder -reparaturlackierung.

Aus der EP-Anmeldung 0 399 427 ist eine Basislackformulierung bestehend aus 5 Komponenten a bis e bekannt. Die Komponente a besteht aus einem organisch gelösten Polyacrylat-, Polyester- oder Alkyd-Harz und hierin dispergierten Metallflocken. Die Komponente b besteht aus einem wasserverdünnbaren Harz, das mit Aminen, die im Überschuß zugegeben werden, neutralisiert ist. Die Komponente c besteht aus einer Acryllatex und einem hydrophilen Siliciumdioxid. Die Komponente d ist aus einer Acryllatex in farbgebenden Pigmenten zusammengesetzt. Die Komponente e enthält schließlich einen oberflächenaktiven Fluorkohlenwasserstoff.

Die genannten Komponenten müssen entweder einzeln unter Rühren zugegeben oder nach jeder Zugabe muß intensiv gerührt werden, um Schockerscheinungen zu vermeiden. Ein weiterer entscheidender Nachteil gemäß der EP 0 399 427 ist, daß die effektgebenden und die farbgebenden Pigmente in zwei unterschiedlichen Komponenten a und d bereitgestellt werden. Damit verändert sich das Mischungsverhältnis der in den Komponenten a und d enthaltenden Bindemittel je nach Farbton. D.h., je nach Wahl des Farbtons ändern nisch mit der Änderung des Bindemittelmischungsverhältnisses auch die Eigenschaften des Lackes. Andererseits muß bei der Herstellung eines Uni-Lackes Effektpigmente weggelassen werden, so daß nur noch die Acryllatex aus den Komponenten c und d als Bindemittel vorhanden wären. Nachteilig ist auch, daß in der Komponente d zur Dispergierung der farbgebenden Pigmente eine Acryllatex verwendet wird. Diese Vorgehensweise bereitet technisch erhebliche Probleme, insbesondere hinsichtlich der Stabilität.

Aus der vorangemeldeten und nachveröffentlichten EP 0 468 293 sind Formulierungen bestehend aus vier Komponenten a bis d bekannt. Hierbei entsprechen die Komponenten a bis c den oben beschriebenen Komponenten a,b und d der EP 0 399 427. Die Komponente c der EP 0 399 427 ist in dem Gemisch nicht enthalten.

Die EP 0 471 972 ist ebenfalls vorangemeldet und nachveröffentlicht. Hierbei handelt es sich um eine aus den Komponenten a bis d bestehende Formulierung. Die Komponente a besteht hierbei aus einem Aluminium enthaltend wasserverdünnbaren Acrylatharz. Für die Komponente b ist zwingend eine Acryllatex vorgeschrieben. Die Komponente b enthält ein Rheologiemittel.

Aus der EP-A-0 052 224 ist ferner der Einsatz universell einsetzbarer Pigmentpasten bekannt, die für die fabrikmäßige Produktion von Lacken geeignet sind. Eine Anwendung für die Reparaturlackierung wird nicht erwähnt.

Schließlich ist es aus dem Zeitschriftenartikel von Hauska und Racz in Farbe und Lack, 93. Jahrgang, Heft 2, 1987, Seiten 103 bis 105 bekannt, die Lagerstabilität von wäßrigen Farbdispersionen u.a. dadurch zu verbessern, daß zur Herstellung der wäßrigen Farbdispersionen Aluminiumpasten eingesetzt werden, die neben Aluminiumpigment ein Bindemittel enthalten, das mit dem Aluminiumpigment mischbar und vor dem Verbrauch mit Wasser verdünnbar ist. Die in diesem Zeitschriftenartikel für die Herstellung der Aluminiumpaste genannten Bindemittel eignen sich jedoch nicht für den Einsatz in wäßrigen Überzugsmittel für den Bereich der Autoreparaturlackierung. Entsprechend wird auch bereits in dem Zeitschriftenartikel festgestellt, daß diese Methode keine industrielle Bedeutung hat. Außerdem sind auch in diesem Zeitschriftenartikel der Aufbau eines Mischsystems sowie die hierfür erforderlichen Maßnahmen nicht beschrieben.

Aufgabe der vorliegenden Erfindung ist es, ein Verfahren zur Herstellung einer Autoreparaturlackierung zur Verfügung zu stellen, bei dem ein mehrere Basisfarben enthaltendes Mischsystem bereitgestellt, aus dem Mischsystem ein Überzugsmittel mit genau festgelegter Tönung hergestellt und anschließend appliziert, und getrocknet wird. Insbesondere sollte dieses Mischsystem die Herstellung wäßriger Überzugsmittel ermöglichen, die für die Reparaturlackierung, insbesondere von Schadstellen an Automobilkarossen, geeignet sind. Dabei sollte eine hohe Farbtongenauigkeit der Basisfarben gewährleistet sein, um so die gewünschten Farbtöne ohne aufwendige Maßnahmen beim Lackierer möglichst exakt und reproduzierbar einstellen zu können. Dies bedeutet auch, daß die für den Aufbau dieses Mischsystem verwendeten Basisfarben eine sehr gute Lagerstabilität (> 12 Monate) aufweisen müssen.
Schließlich sollten die unter Verwendung dieses Mischsystems hergestellten wäßrigen Überzugsmittel sowohl im Falle von Effektlacken als auch im Falle von Unifarbtönen zu Beschichtungen mit guten mechanischen Eigenschaften führen.

Dabei sollte dieses Mischsystem die Formulierung von Überzugsmitteln gewährleisten, die dieses hohe Qualitätsniveau bei einem im Vergleich zu den üblicherweise hergestellten Überzugsmitteln verringerten Anteil an organischen Lösemitteln gewährleisten.

Diese Aufgabe wird überraschenderweise dadurch gelöst, daß die Basisfarben (Komponente A) weniger als 5 % Wasser sowie
Aa) 0,5 bis 70 Gew.-% mindestens eines Effektpigments, und/oder mindestens eines farbgebenden Pigments,
Ab) 10 bis 80 Gew.-% mindestens eines wasserverdünnbaren oder wasserdispergierbaren Polyurethanharzes und/oder Aminoplastharzes und/oder Polyacrylatharzes und/oder Polyesterharzes und
Ac) mindestens ein organisches Lösemittel,
enthalten, wobei die Summe der Gewichtsanteile der Komponente Aa) bis Ac) jeweils 100 Gew.-% beträgt, und
mit einer Komponente (B) vermischt werden, die
- pigmentfrei ist und Wasser, ein oder mehrere
- Wasser und,
- entweder ein oder mehrere wasserverdünnbare oder wasserdispergierbare Polyacrylatharze die in die wäßrige Phase durch Neutralisation der Trägergruppen und anschließendes Verdünnen mit Wasser ggf. unter vorheriger teilweiser Entfernung des bei der Herstellung des Harzes eingesetzten organischen Lösemittels überführt worden sind, oder
- wasserverdünnbare Emulsionspolymere, die erhältlich sind, indem
   a) in einer ersten Stufe 10 bis 90 Gewichtsteile eines ethylenischen ungesättigten Monomeren oder eines Gemisches aus ethylenisch ungesättigten Monomeren in wäßriger Phase in Gegenwart eines oder mehrerer radikalbildender Initiatoren polymerisiert werden, wobei das ethylenisch ungesättigte Monomer bzw. das Gemisch aus ethylenisch ungesättigten Monomeren so ausgewählt wird, daß in der ersten Stufe ein Polymer mit einer Glasübergangstemperatur (T_{G1}) von + 30 bis + 110°C erhalten wird und,
   b) nachdem mindestens 80 Gew.-% des in der ersten Stufe eingesetzten ethylenisch ungesättigten Monomers bzw. Monomerengemisches umgesetzt worden sind, in einer zweiten Stufe 90 bis 10 Gewichtsteile eines ethylenisch ungesättigten Monomeren oder eines Gemisches aus ethylenisch ungesättigten Monomeren in Gegenwart des in der ersten Stufe erhaltenen Polymers polymerisiert werden, wobei das in der zweiten Stufe eingesetzte Monomer bzw. das in der zweiten Stufe eingesetzte Gemisch aus ethylenisch ungesättigten Monomeren so ausgewählt wird, daß eine alleinige Polymerisation des in der zweiten Stufe eingesetzten Monomers bzw. des in der zweiten Stufe eingesetzten Gemisches aus ethylenisch ungesättigten Monomeren zu einem Polymer mit einer Glasübergangstemperatur (T_{G2}) von -60 bis +20°C führen würde, und wobei die Reaktionsbedingungen so gewählt werden, daß das erhaltene Emulsionspolymer eine zahlenmittlere Molmasse von 200.000 bis 2.000.000 aufweist und wobei das in der ersten Stufe eingesetzte ethylenisch ungesättigte Monomer bzw. Monomerengemisch in Art und Menge so ausgewählt werden, daß das erhaltene Emulsionspolymer eine Hydroxylzahl von 2 bis 100 mgKOH/G bevorzugt 10 bis 50 mgKOH/g, aufweist und die Differenz T_{G1} - T_{G2} 10 bis 170°C, vorzugsweise 80 bis 150°C beträgt.
- sowie ggfs. weitere Hilfs- und Zusatzstoffe enthält.

Es ist überraschend und war nicht vorhersehbar, daß durch das erfindungsgemäße Mischsystem die Herstellung von wäßrigen Überzugsmassen ermöglicht wird, die sich durch eine exakte und reproduzierbare Einstellung des gewünschten Farbtons auszeichnen, ohne daß hierzu aufwendige Maßnahmen erforderlich sind. Gewährleistet wird dies durch eine hohe Farbtongenauigkeit und eine entsprechend gute Lagerstabilität der Basisfarben. Ein weiterer Vorteil ist darin zu sehen, daß die erfindungsgemäß hergestellten Basisfarben gegen Einfrieren/Auftauen unempfindlich sind. Weiterhin weisen die so hergestellten wäßrigen Überzugsmassen den Vorteil auf, daß sie zu Beschichtungen mit guten mechanischen Eigenschaften führen.

Vorteilhaft ist ferner, daß durch das erfindungsgemäße Mischsystem auch im Bereich der Reparaturlackierung Überzugsmittel zur Verfügung gestellt werden, die den hohen Anforderungen hinsichtlich der Qualität der Reparaturlackierung gerecht werden und dazu als Lösemittel überwiegend Wasser enthalten und in denen organische Lösemittel nur noch in geringen Mengen enthalten sind. Neben wirtschaftlichen Vorteilen führt dieser reduzierte Lösemittelanteil zur Verbesserung der Arbeitssicherheit (Brandschutz) und zur Verringerung der Umweltbelastung beim Trocknen der Lackfilme. Dies ist insbesondere im Bereich der Reparaturlackierung von Automobilkarossen von Bedeutung, da die in diesem Bereich eingesetzten Effektlacke üblicherweise einen sehr hohen Lösemittelanteil von bis zu 90 % enthalten, um einen guten Metalleffekt zu gewährleisten.

Der erfindungsmäße Einsatz im wesentlichen wasserfreier, bevorzugt völlig wasserfreier Basisfarben, bietet außerdem den Vorteil, daß für die Lagerung dieser Basisfarben Behälter verwendet werden können, die nicht (z. B. durch eine entsprechende Innenlackierung) gegen eine Korrosion durch Wasser geschützt sein müssen. Weiterhin können für die Formulierung der Basisfarben unter bestimmten Voraussetzungen auch wasserempfindliche Pigmente eingesetzt werden, wodurch die zur Verfügung stehende Auswahl an Pigmenten erheblich vergrößert wird. Im folgenden sollen nun die einzelnen Komponenten des erfindungsgemäßen Mischsystems näher erläutert werden.

Die Komponente A des Mischsystems kann alle lacküblichen Pigmente enthalten, vorausgesetzt, daß sie nicht innerhalb kurzer Zeit (Zeitspanne zwischen dem Zusammenrühren der Komponenten A und B und der Applikation der Lacke) mit Wasser reagieren und daß sie sich nicht in Wasser lösen. Die Komponente A kann dabei Effektpigmente und/oder farbgebende Pigmente auf anorganischer oder organischer Basis enthalten. Um eine möglichst universelle Einsatzbreite zu gewährleisten und möglichst viele Farbtöne realisieren zu können, ist es bevorzugt, ein Mischsystem auf der Basis von nur farbgebende Pigmente enthaltenden Komponenten A und nur Effektpigmente enthaltenden Komponenten A aufzubauen.

Zur Herstellung der Komponente A können alle üblicherweise bei der Formulierung von wäßrigen Überzugsmitteln eingesetzten Effektpigmente eingesetzt werden.

Beispiele für geeignete Effektpigmente sind handelsübliche Aluminiumbronzen, die gemäß DE-OS 3636183 chromatierten Aluminiumbronzen, handelsübliche Edelstahlbronzen sowie andere übliche Metallplättchen und Metallflockenpigmente. Für die Herstellung der Komponente A sind auch nicht metallische Effektpigmente, wie zum Beispiel Perlglanz- bzw. Interferenzpigmente geeignet.
Beispiele für geeignete farbgebende Pigmente auf anorganischer Basis sind Titandioxid, Eisenoxide, Ruß u.a. Beispiele für geeignete farbgebende Pigmente auf organischer Basis sind Indanthrenblau, Cromophthalrot, Irgazinorange, Sicotransgelb, Heliogengrün u.ä.

Als Bindemittel für den Einsatz in der Komponente A sind alle wasserverdünnbaren bzw. wasserdispergierbaren Polyurethanharze, Aminoplastharze, Polyacrylatharze und Polyesterharze geeignet, die üblicherweise in wäßrigen Überzugsmitteln eingesetzt werden und die sich in Form organischer Lösungen darstellen lassen. Die Wasserverdünnbarkeit bzw. Wasserdispergierbarkeit der Harze kann dabei auch durch Verwendung entsprechender Lösevermittler als Cosolvens bzw. Solvens eingestellt werden. Entscheidend für die Auswahl der Bindemittel ist einerseits die gute Lagerstabilität in organischer Lösung, insbesondere auch die Fähigkeit, ein Absetzen der Pigmente zu vermeiden, sowie andererseits die problemlose Einarbeitbarkeit der Basisfarbe in die Komponente B bzw. die problemlose Einarbeitbarkeit der Komponente B in die Basisfarbe. Die Einarbeitbarkeit der Basisfarbe in die Komponente B bzw. die umgekehrte Einarbeitbarkeit können zwar auch durch die Verwendung von Dispergieradditiven, wie zum Beispiel ionische oder nichtionische Tenside, gesteuert werden. Derartige Additive sollten aber in möglichst geringen Mengen eingesetzt werden, um die Wasserfestigkeit der resultierenden Beschichtungen nicht zu beeinträchtigen.

Insbesondere werden als Bindemittel für die Komponente A wasserverdünnbare bzw. wasserdispergierbare und in organischer Lösung darstellbare Polyurethanharze, Polyacrylatharze, Polyesterharze und Aminoplastharze sowie deren Mischungen eingesetzt.

Die als Bindemittel in den Basisfarben eingesetzten Polyurethanharze sind prinzipiell bekannt. Geeignet sind beispielsweise die in der Literatur für den Einsatz in Wasserbasislacken beschriebenen Polyurethanharze, sofern diese Polyurethanharze - in Abwandlung der in der jeweiligen Literatur beschriebenen Herstellung - in Form organischer Lösungen darstellbar sind.

Beispiele für geeignete Polyurethanharze sind die in den folgenden Schriften beschriebenen Harze:
EP-A-355433, DE-OS 3545618, DE-OS 3813866 sowie die noch nicht veröffentliche deutsche Patentanmeldung DE 4005961.8.
Bezüglich näherer Einzelheiten der Herstellung der Polyurethanharze und Beispiele geeigneter Verbindungen sei daher auf diese Schriften verwiesen. Die Polyurethanharze kommen allerdings im Unterschied zu den in diesen Schriften beschriebenen Polyurethanharzen nicht als wäßrige Dispersion, sondern in einem oder mehreren organischen Lösungsmitteln gelöst zum Einsatz. Dies bedeutet, daß das Herstellverfahren der erfindungsgemäß eingesetzten Polyurethanharze gegenüber den in diesen Schriften beschriebenen Verfahren dahingehend geändert wurde, daß statt der Herstellung einer Sekundärdispersion ein Lösen der Polyurethanharze in organischen Lösemitteln erfolgt.
Bevorzugt werden wasserverdünnbare Polyurethanharze eingesetzt, die ein zahlenmittleres Molekulargewicht (Bestimmung: gelpermeationschromatographisch mit Polystyrol als Standard) von 1000 bis 30.000, vorzugsweise von 1500 bis 20000, sowie eine Säurezahl von 5 bis 70 mg KOH/g, vorzugsweise 10 bis 30 mg KOH/g aufweisen und durch Umsetzung, vorzugsweise Kettenverlängerung, von Isocyanatgruppen aufweisenden Präpolymeren herstellbar sind.

Die Herstellung des isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150 °C, bevorzugt 50 bis 130 °C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und sie können reaktionsträge anionische Gruppen enthalten. Um die Härte des Polyurethans zu erhöhen, kann man niedermolekulare Polyole einsetzen. Sie haben ein Molekulargewicht von 60 bis zu etwa 400, und können aliphatische, alicyclische oder aromatische Gruppen enthalten. Es werden dabei Mengen von bis zu 30 Gew.-% der gesamten Polyol-Bestandteile, bevorzugt etwa 2 bis 20 Gew.-%, eingesetzt.
Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer Molmasse Mn von 400 bis 5000 bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden.

Als typische multifunktionelle Isocyanate werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung.
Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Zur Herstellung festkörperreicher Polyurethanharzlösungen werden insbesondere Diisocyanate der allgemeinen Formel (I) 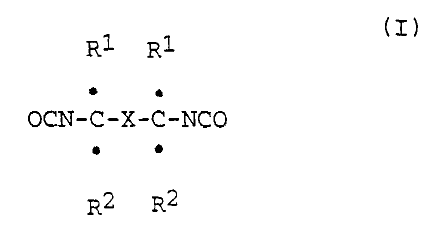 eingesetzt, wobei X für einen zweiwertigen, aromatischen Kohlenwasserstoffrest, vorzugsweise für einen gegebenenfalls halogen-, methyl- oder methoxy-substituierten Naphtylen-, Biphenylen- oder 1,2-, 1,3- oder 1,4-Phenylenrest, besonders bevorzugt für einen 1,3-Phenylenrest und R¹ und R² für einen Alkylrest mit 1 bis 4 Kohlenstoffatomen, besonders bevorzugt für einen Methylrest stehen.
Diisocyanate der Formel (I) sind bekannt (ihre Herstellung wird beispielsweise in der EP-A-101 832, US-PS-3,290,350, UP-PS-4,130,577 und US-PS-4,439,616 beschrieben) und zum Teil im Handel erhältlich (1,3-Bis(2-isocyanatoprop-2-yl)benzol wird beispielsweise von der American Cyanamid Company unter dem Handelsnamen TMXDI (META)^{R} verkauft).

Zusätzlich zu den Diisocyanaten der Formel (I) oder stattdessen können auch noch andere aliphatische und/oder cycloalipatische und/oder aromatische Polyisocyanate eingesetzt werden. Als Beispiele für zusätzlich einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclopentylendiisocyanat, Cyclohexylendiisocyanat, Methylcyclohexylendiisocyanat, Dicyclohexymlmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet (Trägergruppen). Geeignete Trägergruppen sind nichtionische Gruppen (z. B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die zwei mit Isocyanatgruppen reagierende H-aktive Gruppen und mindestens eine zur Anionenbildung befähigte Gruppe enthalten. Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den anderen gegenüber Isocyanatgruppen reaktiven Gruppen des Moleküls reagieren. Es werden dazu Alkansäuren mit zwei Substituenten am α-ständigen Kohlenstoffatom eingesetzt.
Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.
Die durch die Carboxylgruppen-Neutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 6 Gew.-%. Die Menge an Dihydroxialkansäuren im unneutralisierten-Präpolymeren ergibt eine Säurezahl von wenigstens 5, vorzugsweise wenigstens 10. Bei sehr niedrigen Säurezahlen sind i.a. weitere Maßnahmen zur Erzielung der Wasserdispergierbarkeit erforderlich. Die obere Grenze der Säurezahl liegt bei 70, vorzugsweise bei 40 mg KOH/g, bezogen auf den Feststoff.
Die erfindungsgemäß verwendeten NCO-Präpolymeren können durch gleichzeitige Umsetzung des Polyols oder Polyolgemisches mit einem Diisocyanat-Überschuß hergestellt werden. Andererseits kann die Umsetzung auch in vorgeschriebener Reihenfolge stufenweise vorgenommen werden. Beispiele sind in der DE OS 26 24 442 und der DE OS 32 10 051 beschrieben. Die Reaktionstemperatur beträgt bis zu 150 °C, wobei eine Temperatur im Bereich von 50 bis 130 °C bevorzugt wird.
Die Umsetzung wird fortgesetzt, bis praktisch alle Hydroxylfunktionen umgesetzt sind.
Das NCO-Präpolymer enthält wenigstens etwa 0,5 Gew.-% Isocyanatgruppen, vorzugsweise wenigstens 1 Gew-% NCO, bezogen auf Feststoff. Die obere Grenze liegt bei etwa 15 Gew.-%, vorzugsweise 10 Gew.-%, besonders bevorzugt bei 5 Gew.-%.
Die Umsetzung kann gegebenenfalls in Gegenwart eines Katalysators, wie Organozinnverbindungen und/oder tertiären Aminen durchgeführt werden. Um die Reaktionsteilnehmer in flüssigem Zustand zu halten und eine bessere Temperaturkontrolle während der Reaktion zu ermöglichen, ist der Zusatz von organischen Lösemit-teln, die keinen aktiven Wasserstoff nach Zerewitinoff enthalten, möglich. Die Menge an Lösemittel kann in weiten Grenzen variieren und sollte zur Bildung einer Präpolymer-Lösung mit geeigneter Viskosität ausreichen. Im allgemeinen werden 10 bis 70 Gew.-% Lösemittel, vorzugsweise 20 bis 50 Gew.-% Lösemittel, bezogen auf den Festkörper eingesetzt.

Die noch vorhandenen Isocyanatgruppen des Präpolymers werden mit einem Modifizierungsmittel umgesetzt. Diese Reaktion führt insbesondere zu einer weiteren Verknüpfung und Erhöhung des Molekulargewichts. Die Menge dieses Modifizerungsmittels wird durch seine Funktionalität und den NCO-Gehalt des Präpolymeren bestimmt. Das Aquivalentverhältnis der aktiven Wasserstoffatome im Modifizierungsmittel zu den NCO-Gruppen im Präpolymer sollte in der Regel geringer als 3:1 sein und vorzugsweise im Bereich zwischen 1:1 und 2:1 liegen.

Bevorzugt werden als Modifizierungsmittel für die Umsetzung mit dem Präpolymer Di-, besonders bevorzugt Tri- und/oder Polyole eingesetzt.

Es können aber auch andere Verbindungen mit aktiven Wasserstoffatomen als Modifizierungsmittel eingesetzt werden, beispielsweise Polyamine, allerdings nur unter der Voraussetzung, daß die Umsetzung des Präpoly-mers mit dem Modifizierungsmittel in einem organischen Lösemittel durchführbar (kontrollierbar) ist und bei dieser Reaktion keine unerwünschten Reaktionen, wie z. B. die bei Einsatz von Polyaminen häufig beobachtete Gelierung an der Eintropfstelle des Amins, auftreten. Als Beispiel für mindestens drei Hydroxylgruppen enthaltene Polyole seien Trimethylolpropan, Glycerin, Erythrit, Mesoerythrit, Arabit, Adonit usw. genannt. Bevorzugt wird Trimethylolpropan eingesetzt. Die Umsetzung des Präpolymeren mit den Tri- und/oder Poly-olen wird vorzugsweise durch die Stöchiometrie der eingesetzten Verbindungen so gesteuert, daß es zu Kettenverlängerungen kommt.

Die als Bindemittel für die Komponente A eingesetzten Polyacrylatharze sind ebenfalls bekannt und beispielsweise in DE-OS 3832826 beschrieben. Geeignet sind allgemeinen wasserverdünnbare bzw. wasserdispergierbare Polyacrylatharze, die sich in Form organischer Lösungen darstellen lassen.

Als Bindemittel für die Komponente A geeignet sind auch wasserverdünnbare bzw. wasserdispergierbare und in Form organischer Lösungen darstellbare Polyesterharze. Eingesetzt werden beispielsweise entsprechende handelsübliche wasserverdünnbare bzw. wasserdispergierbare Polyesterharze sowie die überlicherweise in Wasserbasislacken eingesetzten Polyesterharze.

Als Bindemittel für die Komponente A sind auch wasserverdünnbare bzw. wasserdispergierbare Aminoplastharze geeignet. Bevorzugt werden wasserverdünnbare Melaminharze eingesetzt. Es handelt sich hierbei im allgemeinen um veretherte Melamin-Formaldehyd-Kondensationsprodukte. Die Wasserlöslichkeit der Aminoplastharze hängt - abgesehen vom Kondensationsgrad, der möglichst gering sein soll- von der Veretherungskomponente ab, wobei nur die niedrigsten Glieder der Alkohol bzw. Ethylenglykolmonoetherreihe wasserlösliche Kondensate erge-ben. Die größte Bedeutung haben die mit Methanol veretherten Melaminharze. Bei Verwendung von Lösungsvermittlern können auch butanolveretherte Melaminharze in wäßriger Phase dispergiert werden. Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich und können in den Basisfarben enthalten sein.

Als Bindemittel können in den Basisfarben A selbstverständlich auch Mischungen der genannten Bindemittel sowie zusätzlich andere wasserverdünnbare bzw. wasserdispergierbare Bindemittel eingesetzt werden.

Bevorzugt enthalten die Basisfarben A als Bindemittel wasserverdünnbare Polyurethanharze oder wasserverdünnbare Aminoplastharze oder Mischungen aus wasserverdünnbaren Polyurethanharzen und Aminoplastharzen.

Es ist erfindungswesentlich, daß die Basisfarben A im wesentlichen wasserfrei, bevorzugt völlig wasserfrei sind. Der Wassergehalt der Basisfarben sollte weniger als 5 Gew.-%, bezogen auf das Gesamtgewicht der Basisfarbe, betragen.

Als Lösemittel enthält die Basisfarbe ein oder mehrere organische Lösemittel. Beispiele für geeignete Lösemittel sind insbesondere wasserlösliche bzw. wasserverdünnbare Lösemittel, wie z.B. Alkohole, Ester, Ketone, Ketoester, Glykoletherester u.ä. Bevorzugt eingesetzt werden Alkohole und Glykolether, besonders bevorzugt Butylglykol und Butanole.

Es besteht dabei die Möglichkeit, bereits bei der Herstellung der Bindemittel Lösemittel einzusetzen, die auch später als Lösemittel in der Basisfarbe verbleiben. Häufiger wird jedoch zur Herstellung der Bindemittel ein anderes Lösungsmittel eingesetzt, das nach der Herstellung der Bindemittel durch Vakuumdestillation oder Dünnschichtverdampfung schonend abdestilliert und durch ein Lösemittel ersetzt wird, das in der Bindemittellösung verbleibt, die dann in der Basisfarbe eingesetzt wird. Höhersiedende Lösemittel sollten wasserlöslich sein und verbleiben in der Polyurethanharzlösung, die in der Basisfarbe eingesetzt wird, um das Zusammenfließen der Polymerteilchen während der Filmbildung zu erleichtern. So erfolgt beispielsweise die Herstellung der Polyurethanharzlösung in einem Keton, wie z. B. Methylethylketon oder Aceton. Nach Zugabe von Buylglykol erfolgt anschließend der Lösemittelaustausch durch destillative Entfernung des Ketons (Methylethylketon,
Aceton). Besonders bevorzugt sind als Lösemittel für die Herstellung des Polyurethanharzes Methoxipropylacetat, Ethoxiethylacetat und N-Methylpyrrolin, die nicht ausgetauscht werden müssen (kein aktiver Wasserstoff) und in der Komponente A verbleiben können.
Ggf. können diese Lösemittel für die Herstellung der Polyurethanharze auch im Gemisch mit Ketonen eingesetzt werden, wobei die Ketone aber nicht in der Basisfarbe verbleiben, sondern nach Herstellung des Polyurethanharzes ausgetauscht werden.

Die Komponente A kann außerdem noch übliche Hilfs- und Zusatzstoffe enthalten. Beispiele für derartige Additive sind Entschäumer, Dispergierhilfsmittel, Emulgatoren, Verlaufsmittel u.a.

Die Herstellung der Komponente A erfolgt nach dem Fachmann bekannten Methoden durch Mischen und ggf. Dispergieren der einzelnen Komponenten. So erfolgt die Einarbeitung von farbgebenden Pigmenten üblicherweise durch Anreiben (Dispergieren) der jeweiligen Pigmente mit einem oder mehreren der obenbeschriebenen Bindemittel, die bevorzugt in Form ihrer Lösungen in organischen Lösemitteln eingesetzt werden. Ggf. kann zum Anreiben noch weiteres organisches Lösemittel zugesetzt werden. Das Anreiben dieser Pigmente erfolgt mit Hilfe üblicher Vorrichtungen, wie beispielsweise Perlmühlen und Sandmühlen.

Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der obenbeschriebenen Bindemittel, ggf. unter Zusatz von weiteren organischen Lösemitteln, mittels eines Rührers oder Dissolvers eingerührt. Die Bindemittel werden bevorzugt in Form ihrer Lösungen in organischen Lösemitteln eingesetzt.

Die jeweiligen Mengenverhältnisse an Pigment, Bindemittel und Lösemittel richten sich dabei, wie dem Fachmann geläufig ist, nach dem Fließverhalten der Pigmentpaste und sind damit abhängig von dem jeweils verwendeten Pigment.

Einen weiteren erfindungswesentlichen Bestandteil des Mischsystems stellt die wasserhaltige Komponente B dar. Denkbar ist der Einsatz einer Komponente B, die nur entionisiertes Wasser enthält und somit nur zur Einstellung der Verarbeitungsviskosität bzw. des Verarbeitungsfestkörpers der Basisfarben dient. Bevorzugt enthält die Komponente B jedoch mindestens ein rheologiesteuerndes Additiv. Ggf. kann die Komponente B noch weitere Hilfs- und Zusatzstoffe, ein oder mehrere wasserverdünnbare bzw. wasserdispergierbare Bindemittel und organische Lösemittel enthalten.

Als rheologiesteuerndes Additiv kommen vernetzte polymere Mikroteilchen, wie sie beispielsweise in der EP-A-38127 offenbart sind, und/oder andere übliche rheologische Additive zum Einsatz. So wirken als Verdicker beispielsweise anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs, sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxilierte Urethane oder Polyacrylate. Bevorzugt werden als Verdicker anorganische Schichtsilikate eingesetzt. Besonders bevorzugt ist eine Kombination aus carboxylgruppenhaltigem Polyacrylat-Copolymer mit einer Säurezahl von 60 bis 780, bevorzugt 200 bis 500 mg KOH/g und einem Natrium-Magnesium-Schichtsilikat.

Bevorzugt wird das Natrium-Magnesium-Schichtsilikat in Form einer wäßrigen Paste eingesetzt. Besonders bevorzugte Pasten enthalten entweder 3 Gew.-% Schichtsilikat sowie 3 Gew.-% Polypropylenglykol oder 2 Gew.-% Schichtsilikat und 0,6 Gew.-% Polypropylenglykol oder 2 Gew.-% Schichtsilikat und 2 Gew.-% anderer handelsüblicher oberflächenaktiver Substanzen, wobei alle Prozentangaben auf das Gesamtgewicht der Paste bezogen sind. Diese wäßrigen Pasten des Verdickungsmittels sollten nur der Komponente B und nicht der Komponente A zugesetzt werden.

Für den Einsatz in der Komponente B geeignet sind die bereits bei der Beschreibung der Komponente A aufgeführten wasserverdünnbaren bzw. wasserdispergierbaren Polyacrylatharze. Im Unterschied zum Einsatz dieser Harze in der Komponente A können diese Bindemittel beim Einsatz in der Komponente B nicht nur als organische Lösung sondern auch bevorzugt in einer wasserenthaltenden Form eingesetzt werden. Diese Überführung der Harze in die wäßrige Phase erfolgt beispielsweise durch Neutralisation der Trägergruppen (zur Anionen- oder Kationenbildung fähige Gruppen, wie zum Beispiel Carboxylgruppen) und anschließendes Verdünnen mit Wasser, ggf. unter vorheriger teilweiser Entfernung des bei der Herstellung des Harzes eingesetzten organischen Lösemittels oder durch direkten Aufbau des Harzes in Gegenwart von Wasser. Wegen weiterer Einzelheiten sei auf die Literatur verwiesen, in denen die Herstellung der Harze beschrieben ist (vgl. z.B. DE-OS 3210051, DE-OS 2624442, DE-OS 3739332, US-PS 4,719,132, EP-A-89497, US-PS 4,558,090, US-PS 4,489,135, EP-A-38127, DE-OS3628124, EP-A-158099, DE-OS2926584, EP-A-195931 und DE-OS3321180).

Ferner sind als wasserverdünnbare bzw. wasserdispergierbare Bindemittel für die Komponente B auch die in der DE-OS3841540 beschriebenen wasserverdünnbaren Emulsionspolymere geeignet. Diese Emulsionspolymere sind erhältlich, indem
a) in einer ersten Stufe 10 bis 90 Gewichtsteile eines ethylenisch ungesättigten Monomeren oder eines Gemisches aus ethylenisch ungesättigten Monomeren in wäßriger Phase in Gegenwart eines oder mehrerer Emulgatoren und eines oder mehrerer radikalbildender Initiatoren polymerisiert werden, wobei das ethylenisch ungesättigte Monomer bzw. das Gemisch aus ethylenisch ungesättigten Monomeren so ausgewählt wird, daß in der ersten Stufe ein Polymer mit einer Glasübergangstemperatur (T_{G1}) von + 30 bis + 110 °C erhalten wird und,
b) nachdem mindestens 80 Gew.-% des in der ersten Stufe eingesetzten ethylenisch ungesättigten Monomers bzw. Monomerengemisches umgesetzt worden sind, in einer zweiten Stufe 90 bis 10 Gewichtsteile eines ethylenisch ungesättigten Monomeren oder eines Gemisches aus ethylenisch ungesättigten Monomeren in Gegenwart des in der ersten Stufe erhaltenen Polymers polymerisiert werden, wobei das in der zweiten Stufe eingesetzte Monomer bzw. das in der zweiten Stufe eingesetzte Gemisch aus ethylenisch ungesättigten Monomeren so ausge-wählt wird, daß eine alleinige Polymerisation des in der zweiten Stufe eingesetzten Monomers bzw. des in der zweiten Stufe eingesetzten Gemisches aus ethylenisch ungesättigten Monomeren zu einem Polymer mit einer Glasübergangstemperatur (T_{G2}) von - 60 bis + 20 °C führen würde, und wobei die Reaktionsbedingungen so gewählt werden, daß das erhaltene Emulsionspolymer eine zahlenmittlere Molmasse von 200.000 bis 2.000.000 aufweist und wobei das in der ersten Stufe eingesetzte ethylenisch ungesättigte Monomer bzw. Monomerengemisch und das in der zweiten Stufe eingesetzte ethylenisch ungesättigte Monomer bzw. Monomerengemisch in Art und Menge so ausgewählt werden, daß das erhaltene Emulsionspolymer eine Hydroxylzahl von 2 bis 100 mgKOH/g, bevorzugt 10 bis 50 mgKOH/g, aufweist und die Differenz T_{G1} - T_{G2} 10 bis 170 °C, vorzugsweise 80 bis 150 °C, beträgt.
   Die erfindungsgemäß eingesetzten wasserverdünnbaren Emulsionspolymere sind durch eine zweistufige Emulsionspolymerisation in einem wäßrigen Medium in den bekannten Apparaturen nach den bekannten Verfahren herstellbar.
   Die Polymerisationstemperatur liegt im allgemeinen im Bereich von 20 bis 100 °C, vorzugsweise 40 bis 90 °C. Das Mengenverhältnis zwischen den Monomeren und dem Wasser kann so ausgewählt werden, daß die resultierende Dispersion einen Feststoffgehalt von 30 bis 60 Gew.-%, vorzugsweise 35 bis 50 Gew.-%, aufweist.

In der ersten Stufe werden vorzugsweise ethylenisch ungesättigte Monomere bzw. Gemische aus ethylenisch ungesättigten Monomeren eingesetzt, die im wesentlichen frei von Hydroxyl- und Carboxylgruppen sind.
"Im wesentlichen frei" soll bedeuten, daß es bevorzugt ist, Monomere bzw. Monomerengemische einzusetzen, die frei von Hydroxyl- und Carboxylgruppen sind, daß die eingesetzten Monomere bzw. Monomerengemische aber auch geringe Mengen (z. B. infolge von Verunreinigungen) an Hydroxyl- und/oder Carboxylgruppen enthalten können. Der Gehalt an Hydroxyl- und Carboxylgruppen sollte vorzugsweise höchstens so hoch sein, daß ein aus dem in der ersten Stufe eingesetzten Monomer bzw. Monomerengemisch hergestelltes Polymer eine OH-Zahl von höchstens 5 mgKOH/g und eine Säurezahl von höchstens 3 mgKOH/g aufweist.
Das erfindungsgemäß eingesetzte Emulsionspolymer sollte eine zahlenmittlere Molmasse (Bestimmung: gelpermeationschromatographisch mit Polystyrol als Standard) von 200.000 bis 2.000.000, vorzugsweise von 300.000 bis 1.500.000 sowie überlicherweise Säurezahlen von unter 100 mg KOH/g und OH-Zahlen von 2 bis 100 mg KOH/g aufweisen. Enthält das Emulsionspolymer dabei keine oder nur sehr wenige Säuregruppen (Säurezahl etwa unterhalb von 3 mg KOH/g), so ist es vorteilhaft, der Beschichtungszusammensetzung ein carboxylgruppenhaltiges Harz, beispielsweise ein carboxylgruppenhaltiges Polyurethan-, Polyester- oder Po-lyacrylatharz zuzusetzen. Die Mengen des carboxylgruppenhaltigen Harzes sind dabei so zu wählen, daß die Säurezahl der Mischung aus Emulsionspolymer und car-boxylgruppenhaltigem Harz größer gleich 10 mg KOH/g ist.

Dem Fachmann ist bekannt, wie er die Reaktionsbedingungen während der Emulsionspolymerisation zu wählen hat, damit er Emulsionspolymere erhält, die die oben angegebenen zahlenmittleren Molmassen aufweisen (vgl. z. B. Chemie, Physik und Technologie der Kunststoffe in Einzeldarstellungen, Dispersionen synthetischer Hochpolymerer, Teil 1 von F. Hölscher, Springer Verlag, Berlin, Heidelberg, New York, 1969).
Die Herstellung dieser wasserverdünnbaren Emulsionspolymeren ist ausführlich in der DE-OS 3841540 auf den Seiten 2 bis 5 beschrieben, so daß hier wegen weiter Einzelheiten nur auf diese DE-OS 3841540 verwiesen wird.

Die Komponente B kann außerdem ggf. noch ein oder mehrere organische Lösemittel sowie ggf. noch weitere übliche Hilfs- und Zusatzstoffe enthalten. Beispiele für geeignete organische Lösemittel sind die bereits bei der Beschreibung der Komponente A aufgeführten Lösemittel. Der Gehalt an organischem Lösemittel beträgt überlicherweise 0 bis 3 Gew.- %, bezogen auf das Gesamtgewicht der Komponente B. Beispiele für geeignete Hilfs- und Zusatzstoffe sind ebenfalls die bei der Beschreibung der Komponente A genannten Additive. Die Einsatzmenge dieser Additive beträgt üblicherweise 0 bis 10 Gew.-%, bezogen auf das Gesamtgewicht der Komponente B.

Falls die Komponente B Bindemittel enthält, werden als Bindemittel bevorzugt wasserverdünnbare bzw. wasserdispergierbare Polyacrylatharze eingesetzt.

Das erfindungsgemäße Mischsystem zur Herstellung wäßriger Überzugsmittel mit genau festgelegter Tönung besteht aus verschiedenen pigmenthaltigen Basisfarben (Komponente A) und mindestens einer wasserenthaltenden Komponente B. Je nach gewünschtem Farbton des wäßrigen Überzugsmittels werden dann zur Herstellung des wäßrigen Überzugsmittels eine oder mehrere Basis farben des Mischsystems mit mindestens einer wasserenthaltenden Komponente B direkt vor der Applikation des wäßrigen Überzugsmittels gemischt. Typische Mischsysteme bestehen aus 15 bis 60, bevorzugt 20 bis 40, verschiedenen Basisfarben und aus 1 bis 5, bevorzugt 1 bis 3, verschiedenen Komponenten B. Bezüglich der Beschreibung üblicher Mischmaschinen für die Bevorratung und Lagerung der Basisfarben und Mischungen wird nur auf die Literatur verwiesen, wie z. B. das Glasurit-Handbuch, 11. Auflage, Kurt R., Vincentz-Verlag, Hannover 1984 , Seiten 544 bis 547.

Bei dem erfindungsgemäß eingesetzten Mischsystem werden als Komponente A Basisfarben eingesetzt, die
Aa) 0,5 bis 70 Gew.-% mindestens eines Effektpigments und/oder mindestens eines farbgebenden Pigments,
Ab) 10 bis 80 Gew.-% mindestens eines wasserverdünn-baren oder wasserdispergierbaren Bindemittels und
Ac) mindestens ein organisches Lösemittel enthalten,
wobei die Summe der Gewichtsanteile der Komponen-ten Aa bis Ac jeweils 100 Gew.-% beträgt.

Außerdem können die Basisfarben noch 0 bis 10 Gew.-%, bezogen auf das Gesamtgewicht der Komponente A, übliche Hilfs- und Zusatzstoffe enthalten. Besonders bevorzugt wird das Mischsystem aus Basisfarben, die nur Effektpigmente enthalten und Basisfarben, die nur farbgebende Pigmente enthalten, aufgebaut.

Besonders bevorzugte Basisfarben (Komponente A) auf der Basis von Effektpigmenten enthalten
Aa) 0,5 bis 50 Gew.-% mindestens eines Effektpigments,
Ab) 20 bis 80 Gew.-% mindestens eines wasserverdünn-baren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugte Basisfarben (Komponente A) auf der Basis anorganischer farbgebender Pigmente enthalten
Aa) 1 bis 70 Gew.-% mindestens eines anorganischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugte Basisfarben (Komponente A) auf der Basis organischer farbgebender Pigmente enthalten
Aa) 1 bis 30 Gew.-% mindestens eines organischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Selbstverständlich können auch Basisfarben als Komponente A eingesetzt werden, die eine Kombination aus mindestens einem organischen farbgebenden und mindestens einem anorganischen farbgebenden Pigment enthalten.

Als Komponente B werden bevorzugt Mischungen eingesetzt, die
Ba) 80 bis 97 Gew.-%, Wasser,
Bb) 2 bis 5 Gew.-%, mindestens eines rheologiesteuernden Additives, wobei diese Menge auf das Gewicht des reinen Additivs ohne Lösemittelanteil bezogen ist und
Bc) mindestens ein wasserverdünnbares oder wasserdispergierbares Polyacrylatharz
   enthalten, wobei die Summe der Gewichtsanteile der Komponenten Ba bis Bc jeweils 100 Gew.-% beträgt.

Die verschiedenen Basisfarben A werden zur Herstellung der wäßrigen Überzugsmittel in einem solchen Verhältnis gemischt, daß der gewünschte Farbton resultiert. Das Mischungsverhältnis der Komponente A mit der oder den verschiedenen Komponenten B wird durch die Forderung bestimmt, daß das resultierende Überzugsmittel unabhängig vom Farbton die gewünschte Viskosität, den gewünschten Festkörpergehalt und den gewünschten Gehalt an organischen Lösemitteln usw. aufweist.

Der Festkörpergehalt (Menge an eingesetztem festen Bindemittel plus Menge an eingesetztem Pigment) sowie der Gehalt an organischem Lösemittel u.ä. variiert mit dem Verwendungszweck der wäßrigen Überzugsmittel. Im Bereich der Autoreparaturlacke liegt der Festkörpergehalt für Metalliclacke bevorzugt bei 7 bis 25 Gew.-% und für unifarbige Lacke bevorzugt bei 10 bis 45 Gew.-%, jeweils bezogen auf das Gesamtgewicht der wäßrigen Überzugsmittel.

Eine bevorzugte Ausführungsform des erfindungsgemäßen Mischsystems ist ein Mischsystem, bei dem alle Basisfarben das gleiche bzw. im Falle einer Bindemittelmischung die gleichen Bindemittel enthalten. Besonders bevorzugt weisen alle Basisfarben des Mischsystems das gleiche Verhältnis der Menge an eingesetztem festen Bindemittel (d.h. ohne Lösemittel) zu der Menge an eingesetztem organischen Lösemittel auf.
Dies gewährleistet, daß - unabhängig vom gewünschten Farbton und somit unabhängig vom Mischungsverhältnis der verschiedenen Basisfarben - die resultierende Mischung der verschiedenen Basisfarben stets das gleiche Bindemittel:Lösemittel-Verhältnis hat und damit unabhängig vom Farbton ein etwa gleichbleibendes Abdunstverhalten (Trocknung) sowie eine ähnliche Rheologie zeigt. Dieses konstante Bindemittel:Lösemittel-Verhältnis in allen Basisfarben gewährleistet außerdem, daß auch ggf. das Verhältnis Bindemittel (gelöst):Bindemittel (dispergiert) im fertigen wäßrigen Lack konstant ist, sofern die Komponente B, wie es erfindungsgemäß geforder ist, Bindemittel enthält. Der Einsatz von verschiedenen Basisfarben mit jeweils identischem Bindemittel:Lösungsmittel-Verhältnis weist den praktischen Vorteil auf, daß unabhängig vom jeweils gewünschten Farbton konstante Filmeigenschaften erzielt werden.

Wird in den Basisfarben jeweils eine Mischung verschiedener Bindemittel eingesetzt, so sollte auch das Mischungsverhältnis der verschiedenen Bindemittel untereinander in den einzelnen Basisfarben bevorzugt jeweils konstant sein, um so nach Mischung mit der Komponente B wiederum konstante Mischungsverhältnisse hinsichtlich der Bindemittel unabhängig vom Farbton zu erzielen.

Die unter Verwendung des erfindungsgemäßen Misch-systems hergestellten wäßrigen Überzugsmittel können auf die verschiedensten Substrate, wie z. B. Metall, Holz, Kunststoff oder Papier aufgebracht werden.

Die mittels des erfindungsgemäßen Mischsystems hergestellten wäßrigen Überzugsmittel eignen sich für die Reparaturlackierung von Schadstellen, insbesondere für die Autoreparaturlackierung. Die Überzugsmittel werden in diesem Fall direkt nach ihrer Herstellung durch Mischen der Komponenten A und B auf die entsprechend vorbereitete Schadstelle (z.B. durch Spachteln und Füllern) mittels üblicher Methoden, insbesondere Spritzen, aufgebracht. Bevorzugt werden die unter Verwendung des erfindungsgemäßen Mischsystems hergestellten wäßrigen Überzugsmittel zur Erzeugung einer Basisschicht eingesetzt.

Nach Antrocknung der so hergestellten Basisschicht bei Raumtemperatur oder durch forcierte Trocknung (z.B. 10 min. bei 60°C, 80 °C oder IR-Trocknung) wird eine geeignete transparente Deckbeschichtungszusammensetzung aufgebracht. Als Decklack geeignet sind sowohl organisch gelöste als auch wäßrige 1- oder 2-Komponenten-Klarlacke sowie Pulverklarlacke. Häufig eingesetzt werden 2-Komponenten-Klarlacke auf Basis eines hydroxylgruppenhaltigen Acrylatcopolymerisates und eines Polyisocyanates. Derartige Klarlacke sind beispielsweise in den Patentanmeldungen DE 34 12 534, DE 36 09 519, DE 37 31 652 und DE 38 23 005 beschrieben. Geeignete l-Komponenten-Klarlacke, beispielsweise auf Basis eines hydroxylgruppenhaltigen Bindemittels und eines Aminoharzhärters sind ebenfalls bekannt und beispielsweise im Kittel, Lehrbuch der Lacke und Beschichtungen, Band IV; Verlag W.A. Colomb in der H. Heeremann GmbH, Berlin-Oberschwandorf 1976 beschrieben. Selbstverständlich sind aber auch alle anderen, hier nicht explizit genannten Klarlacke geeignet.

Nach einer ggf. erforderlichen Ablüftzeit von etwa 5 Minuten wird dann die Basisschicht zusammen mit der Deckschicht getrocknet. Bei Verwendung von 2-Komponenten-Klarlacken erfolgt die Trocknung i.a. bei Temperaturen von unter 100 °C, bevorzugt von unter 80 °C. Die Trockenfilmschichtdicken der Basisschicht liegen i. a. zwischen 5 und 25 µm, die der Deckschicht i.a. zwischen 30 und 70 µm.

Bei Verwendung von 1-Komponenten-Klarlacken wird die Basisschicht zusammen mit der Deckschicht bei erhöhten Temperaturen, z.B. ca. 120°C, getrocknet. Die Trockenfilmschichtdicken der Deckschicht liegen hier i.a. zwischen 30 und 50 µm.

Im folgenden wird die Erfindung anhand von Ausführungsbeispielen näher erläutert. Alle Angaben über Teile und Prozente stellen dabei Gewichtsangaben dar, falls nicht ausdrücklich etwas anderes vermerkt ist.

### 1. Herstellung der Bindemittel für die Komponenten A und B

### 1.1 Herstellung eines Polyurethanharzes 1 für die Komponente A

In einem geeigneten Reaktionsgefäß mit Rührer, Rückflußkühler und Zulaufgefäß werden unter Schutzgas 686,3 g eines Polyesters mit einem zahlenmittleren Molekulargewicht von 1400 auf Basis einer handelsüblichen ungesättigten Dimerfettsäure (mit einer Jodzahl von 10 mg J₂/g, einem Monomerengehalt von maximal 0,1 %, einem Trimergehalt von maximal 2 %, einer Säurezahl von 195 bis 200 mgKOH/g und einer Verseifungszahl von 197 bis 202 mgKOH/g), Isophthalsäure und Hexandiol vorgelegt und nacheinander mit 10,8 g Hexandiol, 55,9 g Dimethylolpropionsäure, 344,9 g Methylethylketon und 303,6 g 4,4'-Di-(isocyanatocyclohexyl)methan versetzt. Diese Mischung wird so lange unter Rückfluß gehalten, bis der Isocyanatgehalt auf 1,0 % abgesunken ist. Anschließend werden dem Gemisch 26,7 g Trimethylolpropan zugegeben und bis zu einer Viskosität von 12 dPas (bei einer Anlösung von 1:1 = Harzlösung-N-Methylpyrrolidon) unter Rückfluß gehalten. Dann werden 1378,7 g Butylglykol zugegeben. Nach einer Vakuumdestillation, in der das Methylethylketon entfernt wird, wird die Harzlösung mit 32,7 g Dimethylethanolamin neutralisiert. Der Feststoffgehalt der resultierenden Harzlösung beträgt 44 %.

Die erhaltene Masse wird unter intensivem Rühren mit Butylglykol auf einen Festkörper von 41 Gew.-% verdünnt.

### 1.2. Herstellung eines Polyacrylatharzes 2 für die Komponente B

In einem zylindrischen Glasdoppelwandgefäß mit Rührer, Rückflußkühler, rührbarem Zulauf-gefäß, Tropftrichter und Thermometer werden 280,03 g deionisiertes Wasser und 2,50 g einer 30 %igen wäßrigen Lösung des Ammoniumsalzes des Penta(ethylenglykol)nonylphenylethersulfats (Fenopon^{R}EP 110 der GAF Corp., Emulgator 1) vorgelegt und auf 80°C aufgeheizt. Im rührbaren Zulaufgefäß wird aus 5,00 g Emulgator 1, 150,01 g deionisiertem Wasser, 2,25 g Acrylamid, 107,92 g Me-thylmethacrylat, 60,84 n-Butylmethacrylat und 42,71 g Styrol eine Emulsion hergestellt. 20 Gew.-% dieser Emulsion werden zur Vorlage gegeben. Dann wird eine Lösung von 0,18 g Ammoniumperoxodisulfat (APS) in 11,04 g deionisiertem Wasser innerhalb von 5 Minuten zugetropft. Es tritt eine exotherme Reaktion ein. Die Reaktionstemperatur wird zwischen 80 und 85°C gehalten. 15 Minuten nach Beendigung der Zugabe der obengenannten APS-Lösung werden eine Lösung von 0,46 g APS in 100,42 g deionisiertem Wasser innerhalb von 3 Stunden und die restlichen 80 Gew.-% der obengenannten Emulsion innerhalb von einer Stunde zugegeben, wobei die Reaktionstemperatur bei 80°C gehalten wird. Nach Beendigung der Zugabe der Emulsion wird auf 77°C abgekühlt und innerhalb von zwei Stunden eine Mischung aus 4,50 g Acrylamid, 8,96 g Methacrylsäure, 155,22 g n-Butylacrylat, 24,79 g Methylmethacrylat, 22,50 g Hydroxipropylmethacrylat, 11,25 g Styrol, 8,96 g 2-Ethylhexylacrylat und 0,46 g Eikosa(ethylenglykol)nonylphenylether (Antarox^{R}CO 850 der GAF Corp., Emulgator 2) zugegeben. Nach Beendigung der Zugabe wird die Reaktionsmischung noch für 1,5 Stunden bei 80°C gehalten. Danach wird abgekühlt und die Dispersion über ein Gewebe mit 30 µm Maschenweite gegeben. Man erhält eine feinteilige Dispersion mit einem nichtflüchtigen Anteil von 45 Gew.-%, einem pH-Wert von 3,8, einer OH-Zahl von 19,4 mgKOH/g und einer Säurezahl von 14,1 mgKOH/g, bezogen auf Festharz.

### 2. Herstellung verschiedener Basisfarben A

Im folgenden wird das erfindungsgemäße Mischsystem beispielhaft anhand der Herstellung verschiedener blauer Metalliclacke erläutert.

Selbstverständlich sind zur Herstellung anderer Farbtöne anders pigmentierte Basisfarben A1-X bis A4-X erforderlich.

Die Herstellung der Basisfarben A1-X bis A4-X erfolgt für effektgebende Pigmente in gleicher Weise wie im folgenden für A1-1 bis A4-1 für ein Aluminiumpigment beschrieben wird und für nichteffektgebende Pigmente in gleicher Weise wie im folgenden für A1-2 bis A4-2 für ein Blaupigment beschrieben wird, jedoch jeweils unter Verwendung anderer geeigneter Pigmente, wobei die Mengenverhältnisse der Bindemittel zu den Lösemitteln und ggf. die Mengenverhältnisse der Bindemittel untereinander jeweils konstant sind und denen bei den unten beschriebenen Verfahren Al bis A4 entsprechen. Die Pigmentierungshöhe wird - wie dem Fachmann bekannt - durch das Fließverhalten bestimmt.

### 2.1 Herstellung einer Aluminium enthaltenden Basisfarbe A1-1

27 Teile einer gemäß DE-OS 3 636 183 chromatierten Aluminiumbronze (Aluminiumgehalt 65 %, durchschnittlicher Teilchendurchmesser 15 µm) werden in 27 Teilen Butylglykol durch 15 minütiges Rühren homogen verteilt und anschließend in eine Mischung aus 10 Teilen Butylglykol und 36 Teilen eines handelsüblichen, methylveretherten Melaminharzes (75 %ig in iso-Butanol) unter Rühren einfließen gelassen. Diese Mischung wird weitere 30 Minuten mit einem Schnellrührer bei 1000 U/min gerührt.

### 2.2 Herstellung einer Aluminium enthaltenden Basisfarbe A2-1:

15,5 Teile einer gemäß DE-OS 3 636 183 chromatierten Aluminiumbronze (Aluminiumgehalt 65 %, durchschnittlicher Teilchendurchmesser 15 µm) werden in 14 Teilen Butylglykol durch 15 minütiges Rühren homogen verteilt und anschließend in eine Mischung aus 51 Teilen der 41 %igen, neutralisierten Polyurethanharzlösung 1, 19,5 Teilen eines handelsüblichen, methylveretherten Melaminharzes (75 %ig in iso-Butanol) und 10 Teilen Butylglykol unter Rühren einfließen gelassen. Diese Mischung wird weitere 30 Minuten mit einem Schnellrührer bei 1000 U/min gerührt.

### 2.3 Herstellung einer Aluminium enthaltenden Basisfarbe A3-1:

20 Teile einer gemäß DE-OS 3 636 183 chromatierten Aluminiumbronze (Aluminiumgehalt 65 %, durchschnittlicher Teilchendurchmesser 15 µm) werden in 9 Teilen Butylglykol und 7 Teilen iso-Butanol durch 15 minütiges Rühren homogen verteilt und anschließend in 64 Teile der 41 %igen, neutralisierten Polyurethanharzlösung 1 unter Rühren einfließen gelassen. Diese Mischung wird weitere 30 Minuten mit einem Schnellrührer bei 1000 U/min. gerührt.

### 2.4 Herstellung einer Aluminium enthaltenden Basisfarbe A4-1:

17,5 Teile einer gemäß DE-OS 3 636 183 chromatierten Aluminiumbronze (Aluminiumgehalt 65 %, durchschnittlicher Teilchendurchmesser 15 um) werden in 16 Teilen Butylglykol durch 15 minütiges Rühren homogen verteilt und anschließend in eine Mischung aus 56,5 Teilen der 41 %igen, neutralisierten Polyurethanharzlösung 1 und 10 Teilen eines handelsüblichen, methylveretherten Melaminharzes (75-ig in iso-Butanol) unter Rühren einfließen gelassen. Diese Mischung wird weitere 30 Minuten mit einem Schnellrührer bei 1000 U/min gerührt.

### 2.5 Herstellung einer Aluminium enthaltenden Basisfarbe A5-1

Es wird analog zur Herstellung der Basisfarbe A3-1 eine Basisfarbe A5-1 hergestellt, mit dem einzigen Unterschied, daß nun als Aluminiumpigment das handelsübliche Aluminiumpigment Alu Stapa PP Chromal X/80 der Fa. Eckart, Fürth, eingesetzt wird.

### 2.6 Herstellung einer Aluminium enthaltenden Basisfarbe A6-1 (Vergleich analog EP-A-320552):

Analog der Verfahrensvorschrift des Beispiels der EP-A-320552 werden 36 Teile einer gemäß DE-OS 3 636 183 chromatierten Aluminiumbronze (Aluminiumgehalt 65 %, durchschnittlicher Teilchendurchmesser 15 µm) in 60 Teilen Butylglykol und 4 Teilen Polypropylenglykol durch 15 minütiges Rühren bei 1000 U/min homogen verteilt.

### 2.7 Herstellung einer Aluminium enthaltenden Basisfarbe A7-1 (Vergleich analog DE-OS 3915459):

36 Teile einer gemäß DE-OS 3 636 183 chromatierten Aluminiumbronze (Aluminiumgehalt 65 %, durchschnittlicher Teilchendurchmesser 15 µm) werden in 64 Teilen Butylglykol durch 15 minütiges Rühren bei 1000 U/min. homogen verteilt.

### 2.8 Herstellung einer Aluminium enthaltenden Basisfarbe A8-1

### (Vergleich zu Basisfarbe A5-1):

Analog der Verfahrensvorschrift des Beispiels 1 der EP-A 297576 werden 17 Teile einer handelsüblichen Aluminiumbronze (Alu-Stapa PP Chromal X/80, der Fa. Eckart, Fürth; Aluminiumgehalt 80 %, durchschnittlicher Teilchendurchmesser 15 µm) in 7,5 Teilen Butylglykol und 5,5 Teilen iso-Butanol durch 15 minütiges Rühren homogen verteilt, anschließend in 54 Teile der 41-%igen, neutralisierten Polyurethanharzlösung 1 einfließen gelassen und mit 16 Teilen entionisiertem Wasser verdünnt. Diese Mischung wird weitere 30 Minuten mit einem Schnellrührer bei 1000 U/min. gerührt.

### 2.9 Herstellung einer blaupigmentierten Basisfarbe A1-2:

10 Teile Paliogenblau, 45 Teile eines handelsüblichen, methylveretherten Melaminharzes (75 %-ig in iso-Butanol) und 45 Teile Butylglykol werden unter Rührer vermischt und mit einer Sandmühle dispergiert.

### 2.10. Herstellung einer blaupigmentierten Basisfarbe A2-2:

7 Teile Paliogenblau, 57 der 41%igen, neutralisierten Polyurethanharzlösung 1, 15 Teile Butylglykol und 21 Teile eines handelsüblichen, methylveretherten Melaminharzes (75%igen in iso-Butanol) werden unter Rühren vermischt und mit einer Sandmühle dispergiert.

### 2.11. Herstellung einer blaupigmentierten Basisfarbe A3-2:

8 Teile Paliogenblau, 73,5 Teile der 41-%igen, neutralisierten Polyurethanharzlösung 1, 10,5 Teile Butylglykol und 8 Teile iso-Butanol werden unter Rühren vermischt und mit einer Sandmühle dispergiert.

### 2.12. Herstellung einer blaupigmentierten Basisfarbe A4-2:

7,5 Teile Paliogenblau, 64 Teile der 41-%igen, neutralisierten Polyurethanharzlösung 1, 11,5 Teile eines handelsüblichen, methylveretherten Melaminharzes (75 %ig in iso-Butanol) und 17 Teile Butylglykol werden unter Rühren vermischt und mit einer Sandmühle dispergiert.

### 2.13. Herstellung einer blaupigmentierten Basisfarbe A5-2

### (Vergleich zu Basisfarbe A2-2):

5,8 Teile Paliogenblau, 46,7 Teile der 41%igen, neutralisierten Polyurethanharzlösung 1, 17,8 Teile eines handelsüblichen, methylveretherten Melaminharzes (75 %ig in iso-Butanol) und 29,7 Teile entionisiertes Wasser werden unter Rühren vermischt und mit einer Sandmühle dispergiert.

### 3. Herstellung der pigmentfreien Komponente B:

### 3.1 Herstellung einer Mischung B 5, mindestens eine Primärdispersion enthaltend:

Zu 57,5 Teilen einer vorgequollenen wäßrigen Paste, enthaltend 3 Gew.-% eines anorganischen Natrium-Magnesium-Schichtsilikat-Verdickungsmittels und 3 Gew.-% Polypropylenglykol mit einem zahlenmittleren Molekulargewicht von 900, wobei die Prozente auf das Gesamtgewicht der Paste bezogen sind, werden 16,5 Teile entionisiertes Wasser, 1,5 Teile Butylglykol, 0,5 Teile eines handelsüblichen Entschäumers, 5 Teile einer 3,5 %igen Lösung eines handelsüblichen Polyacrylatverdickers in Wasser und 19 Teile der Polyacrylatdispersion 2 unter Rühren zugesetzt.

Aus den Komponenten A und der Komponente B wurden die wäßrigen Basisbeschichtungszusammensetzungen 1 - 5 hergestellt (wie in Tabelle 1 beschrieben), indem die jeweilige(n) Basisfarbe(n) A direkt nach ihrer Herstellung in die Mischung B eingerührt wurden. Anschließend wurde die Viskosität durch Zugabe von entionisiertem Wasser auf eine Auslaufzeit von 20 s im DIN-4-Becher (bei 20°C) eingestellt.

In einer zweiten Versuchsreihe erfolgte das Zusammengeben der einzelnen Komponenten zur Prüfung der Lagerstabilität nach einer getrennten Lagerung der einzelnen Komponenten während einer Zeit von 6 Monaten bei Raumtemperatur, bzw. 3 Monaten bei 40°C.

Direkt im Anschluß nach der Herstellung der wäßrigen Basisbeschichtungszusammensetzungen wurden sie nach gut bekannten Methoden auf mit einer handelsüblichen Elektrotauchlackierung und einem konventionellen (d.h. lösemittelhaltigen) oder wasserhaltigen Füller beschichtete phosphatierte Stahlbleche (Bonder 132) gespritzt, nach einer Ablüftzeit von 30 Minuten bei Raumtemperatur (bei einer relativen Luftfeuchtigkeit von 50 % und einer Raumtemperatur von 20°C) mit einem handelsüblichen konventionellen 2-Komponenten-Klarlack auf Basis eines hydroxylgruppenhaltigen Acrylatcopolymerisates und eines Isocyanatvernetzers überlackiert und 30 Minuten bei 60°C getrocknet. Die Trockenfilmschichtdicke der Basisbeschichtungszusammensetzung beträgt 15 /um, die des Klarlackes 50 µm.

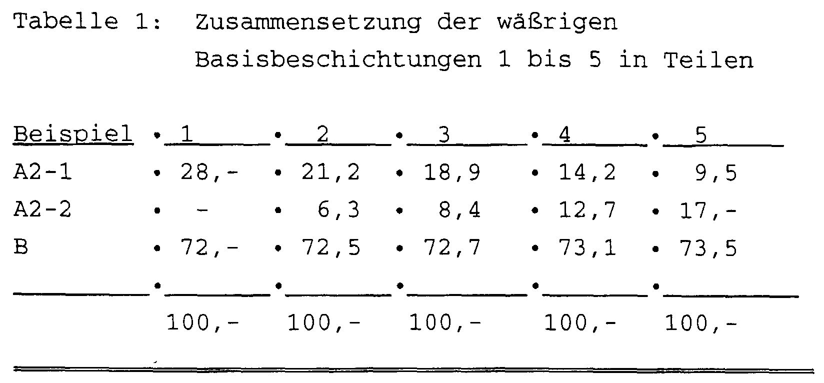

Die Menge der Komponente B ergibt sich aus der Forderung, daß das Verhältnis der Menge der Komponente B zu der Menge an Polyurethanharz und/oder Melaminharz aus den Komponenten A2-1 plus A2-2 in der Beschichtung konstant ist. Analog ergibt sich die Menge an B bei Verwendung anderer Komponenten A2-X.

Nach 3-monatiger Lagerung der einzelnen Komponenten bei 40°C wurden signifikante Unterschiede beobachtet: Dabei unterschieden sich die Eigenschaften der erfindungsgemäßen Basisfarben von denen der Vergleichsbeispiele. Ferner unterschieden sich auch die Eigenschaften der unter Verwendung dieser gelagerten Komponenten hergestellten erfindungsgemäßen Beschichtungszusammensetzungen von denen der zum Vergleich hergestellten Beschichtungszusammensetzungen.

Bei der Prüfung der Komponenten sind diese Unterschiede zum Beispiel in Tabelle 2 für A2-2 und A5-2 dargestellt. Während A2-2 nach 3 Monaten bei 40°C zur Frischabprüfung keine signifikante Farbortabweichung zeigt, ist diese bei A5-2 deutlich erkennbar.

Die Basisfarben A6-1 und A7-1 bildeten nach der Herstellung oder später nach erneutem Aufrühren inner halb von 1 - 2 Stunden einen starken Bodensatz. Daher sind diese Basisfarben für die Verwendung in einer Mischmaschine ungeeignet.

Die Basisfarbe A8-1 (vergleichbar A5-1, jedoch mit entionisiertem Wasser gelagert) zeigte nach 2-3 Tagen bei 30°C starke Wasserstoffentwicklung (Gasung). Die Verwendung dieser Basisfarbe in einer Mischmaschine scheidet daher aus Sicherheitsgründen aus.

Die Überzugsmittel der Beispiele 1 bis 5 zeigten vor und nach Lagerung das gleiche Trocknungsverhalten.

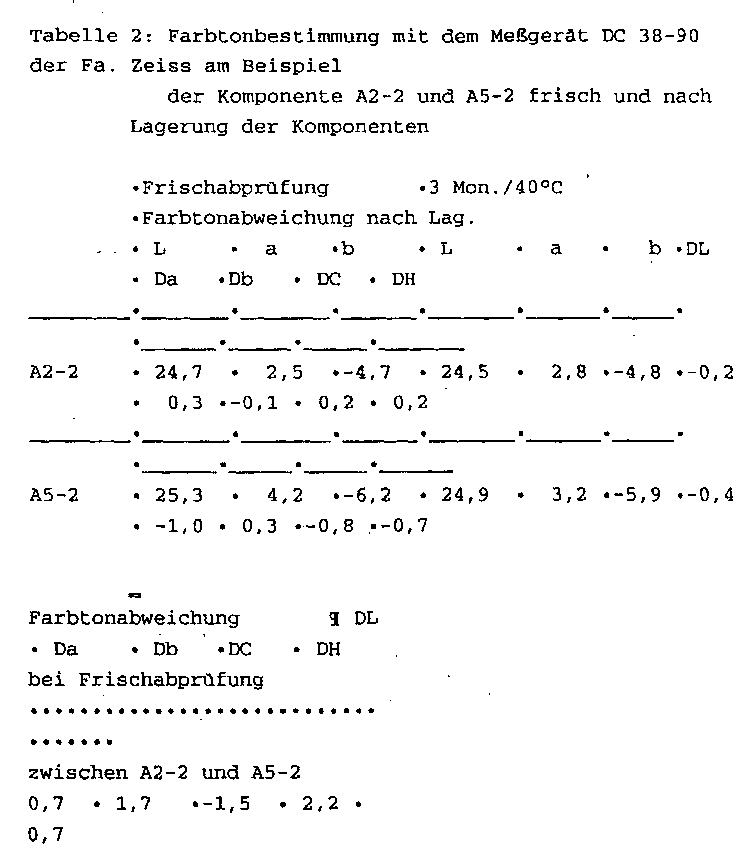

## Patentansprüche

1. Verfahren zur Herstellung einer Autoreparaturlackierung, bei dem ein mehrere Basisfarben enthaltendes Mischsystem bereitgestellt, aus dem Mischsystem ein Überzugsmittel mit genau festgelegter Tönung hergestellt, das hergestellte Überzugsmittel anschließend appliziert und getrocknet wird,
dadurch gekennzeichnet, daß
die Basisfarben (Komponente A) weniger als 5 % Wasser sowie
Aa) 0,5 bis 70 Gew.- % mindestens eines Effektpigments, und/oder mindestens eines farbgebenden Pigments,
Ab) 10 bis 80 Gew.-% mindestens eines wasserverdünnbaren oder wasserdispergierbaren Polyurethanharzes und/oder Aminoplastharzes und/oder Polyacrylatharzes und/oder Polyesterharzes und
Ac) mindestens ein organisches Lösemittel,
enthalten, wobei die Summe der Gewichtsanteile der Komponenten Aa) bis Ac) jeweils 100 Gew.-% beträgt, und
mit einer Komponente (B) vermischt werden, die
- pigmentfrei ist und
- Wasser, und
- entweder ein oder mehrere wasserverdünnbare oder wasserdispergierbare Polyacrylatharze, die in die wäßrige Phase durch Neutralisation der Trägergruppen und anschließendes Verdünnen mit Wasser ggf. unter vorheriger teilweiser Entfernung des bei der Herstellung des Harzes eingesetzten organischen Lösemittels überführt sind, oder
- wasserverdünnbare Emulsionspolymere, die erhältlich sind, indem
a) in einer ersten Stufe 10 bis 90 Gewichtsteile eines ethylenisch ungesättigten Monomeren oder eines Gemisches aus ethylenisch ungesättigten Monomeren in wäßriger Phase in Gegenwart eines oder mehrerer Emulgatoren und eines oder mehrerer radikalbildender Initiatoren polymerisiert werden, wobei das ethylenisch ungesättigte Monomer bzw. das Gemisch aus ethylenisch ungesättigten Monomeren so ausgewählt wird, daß in der ersten Stufe ein Polymer mit einer Glasübergangstemperatur (T_{G1}) von + 30 bis + 110 °C erhalten wird und,
b) nachdem mindestens 80 Gew.-% des in der ersten Stufe eingesetzten ethylenisch ungesättigten Monomers bzw. Monomerengemisches umgesetzt worden sind, in einer zweiten Stufe 90 bis 10 Gewichtsteile eines ethylenisch ungesättigten Monomeren oder eines Gemisches aus ethylenisch ungesättigten Monomeren in Gegenwart des in der ersten Stufe erhaltenen Polymers polymerisiert werden, wobei das in der zweiten Stufe eingesetzte Monomer bzw. das in der zweiten Stufe eingesetzte Gemisch aus ethylenisch ungesättigten Monomeren so ausge-wählt wird, daß eine alleinige Polymerisation des in der zweiten Stufe eingesetzten Monomers bzw. des in der zweiten Stufe eingesetzten Gemisches aus ethylenisch ungesättigten Monomeren zu einem Polymer mit einer Glasübergangstemperatur (T_{G2}) von - 60 bis + 20 °C führen würde, und wobei die Reaktionsbedingungen so gewählt werden, daß das erhaltene Emulsionspolymer eine zahlenmittlere Molmasse von 200.000 bis 2.000.000 aufweist und wobei das in der ersten Stufe eingesetzte ethylenisch ungesättigte Monomer bzw. Monomerengemisch und das in der zweiten Stufe eingesetzte ethylenisch ungesättigte Monomer bzw. Monomerengemisch in Art und Menge so ausgewählt werden, daß das er-haltene Emulsionspolymer eine Hydroxylzahl von 2 bis 100 mgKOH/g, bevorzugt 10 bis 50 mgKOH/g, aufweist und die Differenz T_{G1} - T_{G2} 10 bis 170 °C, vorzugsweise 80 bis 150 °C, beträgt,
- sowie ggfs. weitere Hilfs- und Zusatzstoffe enthält.

2. Verfahren nach Anspruch 1,
dadurch gekennzeichnet, daß die Komponente (A) als Komponente Aa) 1 bis 70 Gew.-% mindestens eines anorganischen farbgebenden Pigments enthält.

3. Verfahren nach einem der Ansprüche 1 oder 2,
dadurch gekennzeichnet, daß die Komponente (A), als Komponente Aa) 1 bis 30 Gew.-% mindestens eines organischen farbgebenden Pigments enthält.

4. Verfahren nach einem der Ansprüche 1 bis 3,
dadurch gekennzeichnet, daß die Komponente (B) sich zusammensetzt aus
Ba) 80 bis 97 Gew.-% Wasser,
Bb) 2 bis 5 Gew.-% mindestens eines rheologiesteuernden Additivs, wobei diese Menge auf das Gewicht des reinen Additivs ohne Lösemittelanteil bezogen ist, und
Bc) mindestens einem wasserverdünnbaren oder wasserdispergierbaren Polyacrylatharz sowie ggfs. weiteren Hilfs- und Zusatzstoffen, wobei die Summe der Gewichtsanteile der Komponenten Ba) bis Bc) jeweils 100 Gew.-% beträgt.

5. Verfahren nach einem der Ansprüche 1 bis 4, dadurch gekennzeichnet, daß die Komponente B zusätzlich ein oder mehrere Wasserverdünnbare oder Wasserdispergierbare Polyurethanharze und/oder Aminoplastharze und/oder Polyesterharze enthält.

## Claims

1. Process for the preparation of an automotive refinish system, in which a mixer system comprising a plurality of base colorants is provided, and a coating composition with accurately defined colours is produced from the mixer system, and the coating composition produced is subsequently applied and dried,
characterized in that
the base colorants (component A) contain less than 5% of water and also
Aa) 0.5 to 70% by weight of at least one special effect pigment and/or at least one colouring pigment,
Ab) 10 to 80% by weight of at least one water-thinnable or water-dispersible polyurethane resin and/or amino resin and/or polyacrylate resin and/or polyester resin, and
Ac) at least one organic solvent,
the sum of the proportions by weight of the components Aa) to Ac) being in each case 100% by weight and
being mixed with a component (B) which
- is pigment-free and comprises
- water and,
- either one or more water-thinnable or water-dispersible polyacrylate resins which have been transferred to the aqueous phase by neutralization of the carrier groups and subsequent dilution with water, with or without prior partial removal of the organic solvent used in preparing the resin, or
- water-thinnable emulsion polymers which can be obtained in that
a) in a first stage, 10 to 90 parts by weight of an ethylenically unsaturated monomer or a mixture of ethylenically unsaturated monomers are polymerized in aqueous phase in the presence of one or more emulsifiers and one or more radical-forming initiators, the ethylenically unsaturated monomer or the mixture of ethylenically unsaturated monomers being chosen so that in the first stage a polymer having a glass transition temperature (T_{G1}) of +30 to +110°C is obtained and,
b) after at least 80% by weight of the ethylenically unsaturated monomer of monomer mixture used in the first stage have been reacted, in a second stage, 90 to 10 parts by weight of an ethylenically unsaturated monomer or a mixture of ethylenically unsaturated monomers are polymerized in the presence of the polymer obtained in the first stage, the monomer used in the second stage or the mixture of ethylenically unsaturated monomers used in the second stage being chosen so that a sole polymerization of the monomer used in the second stage or the mixture of ethylenically unsaturated monomers used in the second stage would give rise to a polymer having a glass transition temperature (T_{G2}) of -60 to +20°C, and the reaction conditions being chosen so that the resultant emulsion polymer has a number-average molecular mass of 200,000 to 2,000,000, and the type and amounts of the ethylenically unsaturated monomer or monomer mixture used in the first stage and of the ethylenically unsaturated monomer or monomer mixture used in the second stage being chosen that the resultant emulsion polymer has a hydroxyl value of 2 to 100 mg of KOH/G, preferably of 10 to 50 mg of KOH/g, and the difference T_{G1} - T_{G2} is 10 to 170°C, preferably 80 to 150°C,
- and also, if desired, comprises further auxiliaries and additives.

2. Process according to Claim 1, characterized in that component (A) comprises as component Aa) from 1 to 70% by weight of at least one inorganic colouring pigment.

3. Process according to one of Claims 1 or 2, characterized in that component (A) comprises as component Aa) from 1 to 30% by weight of at least one organic colouring pigment.

4. Process according to one of Claims 1 to 3, characterized in that component (B) is composed of
Ba) 80 to 97% by weight of water,
Bb) 2 to 5% by weight of at least one rheology-controlling additive, this amount being based on the weight of the pure additive without solvent, and
Bc) at least one water-thinnable or water-dispersible polyacrylate resin, and also, if desired, further auxiliaries and additives, the sum of the proportions by weight of the components Ba) to Bc) being in each case 100% by weight.

5. Process according to one of Claims 1 to 4, characterized in that component B additionally comprises one or more water-thinnable or water-dispersible polyurethane resins and/or amino resins and/or polyester resins.

## Revendications

1. Procédé de production d'un système de retouches d'automobiles, dans lequel un système mixte contenant plusieurs colorants de base est mis à disposition, système mixte à partir duquel une composition de revêtement est préparée avec une coloration définie précisément, la composition de revêtement préparée est ensuite appliquée et séchée,
caractérisé en ce que
les colorants de base (composant A) contiennent moins de 5% d'eau ainsi que
Aa) de 0,5 à 70% en poids d'au moins un pigment à effets, et/ou d'au moins un pigment colorant,
Ab) de 10 à 80% en poids d'au moins une résine de polyuréthanne et/ou une résine aminoplaste et/ou une résine de polyacrylate et/ou une résine de polyester, diluables à l'eau ou dispersables dans l'eau, et
Ac) au moins un solvant organique,
la somme des proportions pondérales des composants Aa) à Ac) étant dans chaque cas de 100% en poids,
et
sont mélangés avec un composant (B) qui
- est exempt de pigment et
- contient de l'eau et
- contient soit une ou plusieurs résines de polyacrylate diluables à l'eau ou dispersables dans l'eau, qui ont été transférées dans la phase aqueuse par neutralisation des groupes porteurs et dilution ultérieure à l'eau, éventuellement en éliminant préalablement partiellement le solvant organique utilisé lors de la préparation de la résine, soit
- des polymères en émulsion diluables à l'eau, qui peuvent être obtenus
a) en polymérisant, dans une première étape, de 10 à 90 parties en poids d'un monomère éthyléniquement insaturé ou d'un mélange de monomères éthyléniquement insaturés en phase aqueuse en présence d'un ou de plusieurs émulsifiants et d'un ou de plusieurs amorceurs générant des radicaux, le monomère éthyléniquement insaturé ou le mélange de monomères éthyléniquement insaturés étant choisi de telle sorte que l'on obtienne, dans la première étape, un polymère ayant une température de transition vitreuse (T_{V1}) de +30 à +110°C,
b) en polymérisant dans une deuxième étape, après qu'au moins 80% en poids du monomère ou du mélange de monomères éthyléniquement insaturés, utilisé dans la première étape ont réagi, de 90 à 10 parties en poids d'un monomère éthyléniquement insaturé ou d'un mélange de monomères éthyléniquement insaturés en présence du polymère obtenu dans la première étape, le monomère utilisé dans la deuxième étape ou le mélange de monomères éthyléniquement insaturés utilisé dans la deuxième étape étant choisi de telle sorte qu'une seule polymérisation du monomère utilisé dans la deuxième étape ou du mélange de monomères éthyléniquement insaturés utilisé dans la deuxième étape donne lieu à un polymère ayant une température de transition vitreuse (T_{V2}) de -60 à +20°C, et les conditions de réaction étant choisies de telle sorte que le polymère en émulsion obtenu présente une masse molaire moyenne en nombre de 200 000 à 2 000 000, et la nature et la quantité du monomère ou du mélange de monomères éthyléniquement insaturés utilisé dans la première étape et du monomère ou du mélange de monomères éthyléniquement insaturés utilisé dans la deuxième étape étant choisies de telle sorte que le polymère en émulsion obtenu présente un indice d'hydroxy de 2 à 100 mg KOH/g, de préférence de 10 à 50 mg KOH/g, et que la différence T_{V1} - T_{V2} soit de 10 à 170°C, de préférence de 80 à 150°C,
- et éventuellement d'autres auxiliaires et additifs.

2. Procédé selon la revendication 1, caractérisé en ce que le composant (A) contient de 1 à 70% en poids d'au moins un pigment colorant inorganique en tant que composant Aa).

3. Procédé selon la revendication 1 ou 2, caractérisé en ce que le composant (A) contient de 1 à 30% en poids d'au moins un pigment colorant organique en tant que composant Aa).

4. Procédé selon l'une quelconque des revendications 1 à 3, caractérisé en ce que le composant (B) est composé de
Ba) 80 à 97% en poids d'eau,
Bb) 2 à 5% en poids d'au moins un additif régulant la rhéologie, cette quantité étant par rapport au poids de l'additif pur sans proportion de solvant, et
Bc) au moins une résine de polyacrylate diluable à l'eau ou dispersable dans l'eau et éventuellement d'autres auxiliaires et additifs, la somme des proportions pondérales des composants Ba) à Bc) étant dans chaque cas de 100% en poids.

5. Procédé selon l'une quelconque des revendications 1 à 4, caractérisé en ce que le composant B contient en outre une ou plusieurs résines de polyuréthanne et/ou résines aminoplastes et/ou résines de polyester diluables à l'eau ou dispersables dans l'eau.
